# EUROPÄISCHE PATENTSCHRIFT

(11) **EP 3 586 699 B1**
(45) Veröffentlichungstag und Bekanntmachung des Hinweises auf die Patenterteilung: **06.01.2021**
(21) Anmeldenummer: 19182426.7
(22) Anmeldetag: 25.06.2019
(51) Int. Cl.: A47J 37/06, A47J 37/12

(54) **SYSTEM ZUR ZUBEREITUNG VON SPEISEN**
SYSTEM FOR PREPARING FOOD
SYSTÈME DE PRÉPARATION D'ALIMENTS

(30) Priorität: 26.06.2018 DE 102018115385
(43) Veröffentlichungstag der Anmeldung: 01.01.2020
(73) Patentinhaber: Rieber GmbH & Co. KG, 72770 Reutlingen (DE)
(72) Erfinder: Maier, Max, 71636 Ludwigsburg (DE)
(74) Vertreter: Schumacher & Willsau

(56) Entgegenhaltungen:
- DE-U1- 20 112 220

## Beschreibung

Die Erfindung betrifft ein System zur Zubereitung von Speisen, bei dem der Garvorgang mithilfe eines Temperatursensors überwacht werden kann, mit einer Speisenaufnahmevorrichtung, in die eine elektrische Heizeinrichtung spülmaschinenfest integriert ist, und mit einer Dockingstation, die einerseits mit einer Energiequelle verbindbar ist und an die andererseits die Speisenaufnahmevorrichtung manuell lösbar ankoppelbar ist.

Ein derartiges System ist beispielsweise aus dem deutschen Gebrauchsmuster DE 201 12 220 U1 bekannt, das einen temperaturgesteuerten Elektrotopf betrifft. Dieser temperaturgesteuerte Elektrotopf weist eine Basis auf, an welche ein Behälter angeschlossen ist, wobei ein elastisches Element an der Außenseite der Basis befestigt ist. Weiterhin ist eine Temperatursonde mit einer Bimetallplatte vorgesehen, die hierin aufgenommen ist, wobei ein Ende der Temperatursonde an das elastische Element angeschlossen ist, während das andere Ende der Temperatursonde sich durch eine Öffnung, die in der peripheren Wandung der Basis ausgebildet ist, hindurcherstreckt. Weiterhin ist ein Temperaturerfassungselement an die Temperatursonde angeschlossen, und es sind eine erste Platte und eine zweite Platte vorgesehen, wobei sich die erste Platte oberhalb der zweiten Platte befindet und mit dieser in Kontakt steht. Dabei kontaktiert ein Ende der Bimetallplatte die zweite Platte. Weiterhin ist ein Topf vorgesehen, an dessen Boden sich ein elektrischer Heizdraht befindet, von dessen Enden zwei Anschlussklemmen ausgehen, die in Eingriff mit dem Behälter stehen, wenn der Topf auf die Basis aufgesetzt ist. Weiterhin ist ein Rahmen an dem Boden des Topfes angeschlossen, der eine Ausnehmung aufweist, mit welcher die Temperatursonde in Eingriff steht, wenn der Topf auf die Basis aufgesetzt ist.

Ein Nachteil des aus dem deutschen Gebrauchsmuster DE 201 12 220 U1 bekannten temperaturgesteuerten Elektrotopfes besteht darin, dass es für einen ordnungsgemäßen Betrieb erforderlich ist, dass ein guter und genau definierter thermischer Kontakt zwischen der Temperatursonde und der Ausnehmung am Boden des Topfes nötig ist. Ein derartiger guter und genau definierter thermischer Kontakt kann jedoch nicht ohne weiteres garantiert werden, beispielsweise weil es zu Verschmutzungen der Temperatursonde und/oder der Ausnehmung kommen kann.

Ausgehend von dem aus dem deutschen Gebrauchsmuster DE 201 12 220 U1 bekannten temperaturgesteuerten Elektrotopf liegt der vorliegenden Erfindung daher die Aufgabe zugrunde, ein System zur Zubereitung von Speisen anzugeben, bei dem der Garvorgang mithilfe eines Temperatursensors genauer und zuverlässiger überwacht werden kann.

Diese Aufgabe wird durch die im Anspruch 1 angegebenen Merkmale gelöst.

Vorteilhafte Ausgestaltungen und Weiterbildungen der Erfindung ergeben sich aus den abhängigen Ansprüchen.

Erfindungsgemäß ist vorgesehen, dass zumindest ein Temperatursensor spülmaschinenfest in die Speisenaufnahmevorrichtung integriert ist, wobei die Dockingstation die Speisenaufnahmevorrichtung basierend auf von dem spülmaschinenfest in die Speisenaufnahmevorrichtung integrierten Temperatursensor empfangenen Daten mit Energie versorgt. Dadurch, dass bei dieser Lösung vorgesehen ist, dass der Temperatursensor fest in die Speisenaufnahmevorrichtung integriert ist, sind Probleme im Hinblick auf einen guten thermischen Kontakt nicht mehr zu befürchten. Die Dockingstation ist vorzugsweise eine intelligente Dockingstation und das System ist vorzugweise über eine App und/oder über vorgegebene Programme zu bedienen.

Bei der Speisenaufnahmevorrichtung kann es sich beispielsweise um eine Grillplatte, insbesondere um eine Teppanyaki-Grillplatte, eine Pfanne, einen Topf, eine Fritteuse, einen Bräter oder einen Kontaktgrill handeln. Selbstverständlich ist es ebenfalls möglich, dass das erfindungsgemäße System mehrere gleiche und/oder verschiedene Speisenaufnahmevorrichtungen und gegebenenfalls auch mehrere Dockingstationen umfasst. Dabei wird es in jedem Fall als vorteilhaft angesehen, wenn ein und dieselbe Dockingstation mit mehreren, vorzugsweise mit allen vorhandenen Speisenaufnahmevorrichtungen verwendet werden kann. Vorzugsweise wird der Dockingstation dabei auf irgendeine geeignete Weise mitgeteilt, mit was für einer Art von Speisenaufnahmevorrichtung sie gerade verwendet wird, denn dann kann die Dockingstation in einem Betriebsmodus betrieben werden, der speziell auf die aktuell verwendete Speisenaufnahmevorrichtung abgestimmt ist. Zu diesem Zweck kann die Speisenaufnahmevorrichtung beispielsweise mit einem für ihre Art eindeutigen mechanischen und/oder optischen Code ausgestattet sein, der von der Dockingstation gelesen wird. Es ist aber auch denkbar, dass die Dockingstation die Art der gerade angekoppelten Speisenaufnahmevorrichtung anhand von elektrischen Signalen bestimmt. Dabei kann es sich um zusätzliche elektrische Signale oder um ohnehin vorhandene elektrische Signale handeln. Beispielsweise ist es denkbar, dass der elektrische Widerstand der elektrischen Heizeinrichtung für jede Art von Speisenaufnahmevorrichtung unterschiedlich ist. Dann kann die Dockingstation durch eine einfache Messung von HeizStrom und -Spannung die Art der Speisenaufnahmevorrichtung bestimmen.

Bei einer besonders bevorzugten Weiterbildung der Erfindung ist vorgesehen, dass die Dockingstation eine Datenschnittstelle umfasst, über die ihr Rezeptdaten zugeführt werden können. Dadurch wird eine zumindest teilweise automatisierte Zubereitung von Speisen möglich. Die Rezeptdaten können dabei beispielsweise Solltemperaturverläufe umfassen, die entweder direkt an die Dockingstation übermitteilt werden oder die von der Dockingstation in Abhängigkeit von weiteren Angaben wie Zutatenmenge und/oder gewünschter Garstufe ermittelt werden.

Vorzugsweise handelt es sich bei der Datenschnittstelle um eine drahtlose Datenschnittstelle. In diesem Zusammenhang kann beispielsweise das Bluetooth-Protokoll oder ein WLAN-Protokoll zum Einsatz kommen. Als besonders vorteilhaft wird es erachtet, wenn das erfindungsgemäße System auf diese Weise mit Smartphones, Tablets oder anderen Computern kommunizieren kann.

Bei allen Ausführungsformen des erfindungsgemäßen Systems kann vorgesehen sein, dass die Dockingstation eine optische Anzeigevorrichtung aufweist, mit der zumindest mit der Speisenzubereitung in Verbindung stehende Daten angezeigt werden können. Im einfachsten Fall kann es sich bei solchen Daten beispielsweise um die aktuelle Heizstufe handeln. Die optische Anzeigevorrichtung kann aber auch ein Display umfassen, auf dem weitaus mehr Informationen angezeigt werden können, beispielsweise die Art der gerade zubereiteten Speise, der aktuelle Garzustand usw. Insbesondere in Fällen, in denen eine Kopplung mit einem Smartphone oder einer ähnlichen Vorrichtung vorgesehen ist, kann aber auch auf eine eigene optische Anzeigevorrichtung verzichtet und auf das Display des Smartphones zurückgegriffen werden.

In diesem Zusammenhang kann weiterhin vorgesehen sein, dass mit der optischen Anzeigevorrichtung Anweisungen zur Zubereitung von Speisen angezeigt werden können. In diesem Fall kann es vorteilhaft sein, wenn das System Mittel umfasst, mit denen der Benutzer bestätigen kann, dass er die entsprechenden Anweisungen durchgeführt hat. Zu diesem Zweck kann die optische Anzeigevorrichtung beispielsweise als Touchscreen ausgebildet sein. Jedoch kann auch in diesem Fall auf die Anzeige- und Bedienelemente beispielsweise eines gekoppelten Smartphones zurückgegriffen werden.

Bei bevorzugten Ausführungsformen des erfindungsgemäßen Systems ist vorgesehen, dass die Speisenaufnahmevorrichtung eine erste Kupplungseinrichtung und die Dockingstation eine daran angepasste zweite Kupplungseinrichtung aufweisen, wobei zumindest Versorgungsanschlüsse der Heizeinrichtung und Temperatursensoranschlüsse im Bereich der ersten Kupplungseinrichtung zugänglich sind, um mit im Bereich der zweiten Kupplungseinrichtung zugänglichen Anschlüssen der Dockingstation verbunden zu werden. Dabei wird es als besonders vorteilhaft erachtet, wenn die Dockingstation seitlich an die Speisenaufnahmevorrichtung angekoppelt werden kann. Die erste Kupplungseinrichtung kann beispielsweise zwei parallel angeordnete Zapfen umfassen, über die die Stromversorgung der elektrischen Heizeinrichtung sichergestellt wird. Dabei können die Zapfen beispielsweise einen metallischen Mantel aufweisen, der im Betrieb des Systems mit einem Schutzleiter in Verbindung steht. Von diesem Mantel isoliert können im Inneren der Außenleiter in dem einen Zapfen und der Neutralleiter in dem anderen Zapfen geführt sein. In einem derartigen Fall umfasst die der Dockingstation zugeordnete zweite Kupplungseinrichtung vorzugweise zwei an die Zapfen angepasste Hülsen an deren Endabschnitten geeignete Mittel zur Kontaktierung des Außenleiters und des Neutralleiters vorgesehen sind. Die Temperatursensoranschlüsse können sowohl speisenaufnahmevorrichtungsseitig als auch dockingstationsseitig durch irgendwelche geeignete metallische Kontakte gebildet sein. Erfindungsgemäß wird bevorzugt, dass der Temperatursensor möglichst unempfindlich ist, weshalb vorzugsweise sämtliche aktive Schaltungskomponenten in der Dockingstation untergebracht sind. Im einfachsten Fall kann der in der Speisenaufnahmevorrichtung untergebrachte Temperatursensor beispielsweise durch einen PTC- oder NTC-Widerstandsdraht gebildet sein.

Bei dem erfindungsgemäßen System kann auch vorgesehen sein, dass die Dockingstation Mittel zur Ausgabe akustischer Signale aufweist. Im einfachsten Fall können dabei Pieptöne zur Signalisierung von einem oder mehreren Betriebszuständen ausgegeben werden.

Es ist aber auch denkbar, dass vorgesehen ist, dass über die Mittel zur Ausgabe akustischer Signale akustische Anweisungen zur Zubereitung von Speisen ausgegeben werden können. Diese Lösung ist, gegebenenfalls in Kombination mit einer optischen Anzeigevorrichtung, besonders vorteilhaft, wenn der Dockingstation über eine Datenschnittstelle Rezeptdaten zugeführt werden können.

Gemäß einer vorteilhaften Ausgestaltung des erfindungsgemäßen Systems ist vorgesehen, dass die Dockingstation im angekoppelten Zustand ausschließlich über die erste Kupplungseinrichtung und die zweite Kupplungseinrichtung gehaltert ist. Dadurch wird sichergestellt, dass durch eine von dem Benutzer vorgenommene Bewegung der Speisenaufnahmevorrichtung keine unbeabsichtigte Trennung von der Dockingstation erfolgen kann.

Besondere Vorteile können sich mit dem erfindungsgemäßen System ergeben, wenn vorgesehen ist, dass es zumindest eine weitere Speisenaufnahmevorrichtung aufweist, wobei die Dockingstation wahlweise mit jeder Speisenaufnahmevorrichtung verwendet werden kann. Insbesondere ist es dabei denkbar, dass beispielsweise in einer Restaurantküche eine der Anzahl der Kochstellen entsprechende Anzahl von Dockingstationen vorgesehen ist, wobei dann Speisenaufnahmevorrichtungen der jeweils benötigten Art aus einem Vorrat auch unterschiedlicher Speisenaufnahmevorrichtungen ausgewählt und verwendet werden können. Beispielsweise im Vergleich zu heutigen je nach Bedarf mit unterschiedlichen Geräten ausstattbaren Front-Cooking-Stationen können auf diese Weise die Kosten gesenkt werden, weil eine geringere Anzahl von intelligenten Gerätesteuerungen erforderlich ist. Es ist auch denkbar, dass die Dockingstation die Speisenaufnahmevorrichtung in einen bestimmten Betriebsmodus (beispielsweise dem Halten der Speisen auf einer bestimmten Temperatur) versetzt, und dass die Dockingstation dann abgenommen und mit einer anderen Speisenaufnahmevorrichtung verwendet werden kann. Allerdings wäre es bei solchen Ausführungsformen erforderlich, für die momentan ohne Dockingstation arbeitende Speisenaufnahmevorrichtung zumindest vorübergehend eine von der Dockingstation unabhängige Stromversorgung vorzusehen. Außerdem wäre dann doch wieder eine gewisse Intelligenz der Speisenaufnahmevorrichtung erforderlich, was eigentlich nicht dem Kerngedanken der vorliegenden Erfindung entspricht, aber trotzdem nicht ausgeschlossen werden soll.

Eine Ausführungsform des erfindungsgemäßen Systems wird nachfolgend anhand der Zeichnungen beispielhaft erläutert.

Es zeigen:
- Figur 1: eine perspektivische Explosionszeichnung einer erfindungsgemäßen Teppanyaki-Grillplatte;
- Figur 2: die Teppanyaki-Grillplatte von Figur 1 im montierten Zustand mit von der Speisenaufnahmevorrichtung abgenommener Dockingstation;
- Figur 3: die Teppanyaki-Grillplatte von Figur 2 mit an die Speisenaufnahmevorrichtung angekoppelter Dockingstation;
- Figur 4: eine Vorderansicht der Teppanyaki-Grillplatte von Figur 3;
- Figur 5: eine Draufsicht auf die Teppanyaki-Grillplatte von Figur 4;
- Figur 6: eine Seitenansicht der Teppanyaki-Grillplatte von Figur 5;
- Figur 7: eine Schnittansicht der Teppanyaki-Grillplatte von Figur 6 entlang der in Figur 5 eingezeichneten Schnittlinie A-A;
- Figur 8: eine perspektivische Darstellung einer Ausführungsform, bei der die Speisenaufnahmevorrichtung als Pfanne ausgebildet ist;
- Figur 9: eine perspektivische Darstellung einer Ausführungsform, bei der die Speisenaufnahmevorrichtung als Kochtopf ausgebildet ist;
- Figur 10: eine perspektivische Darstellung einer Ausführungsform, bei der die Speisenaufnahmevorrichtung als Bräter beziehungsweise Fritteuse ausgebildet ist; und
- Figur 11: eine perspektivische Darstellung einer Ausführungsform, bei der die Speisenaufnahmevorrichtung als Kontaktgrill ausgebildet ist.

Bei der nachfolgenden Beschreibung der Zeichnungen bezeichnen gleiche Bezugszeichen gleiche oder vergleichbare Komponenten.

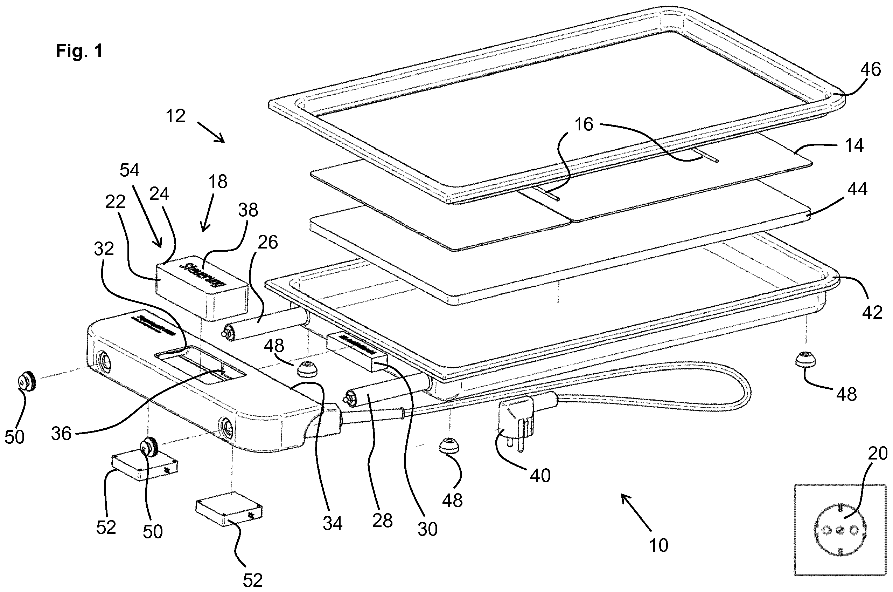

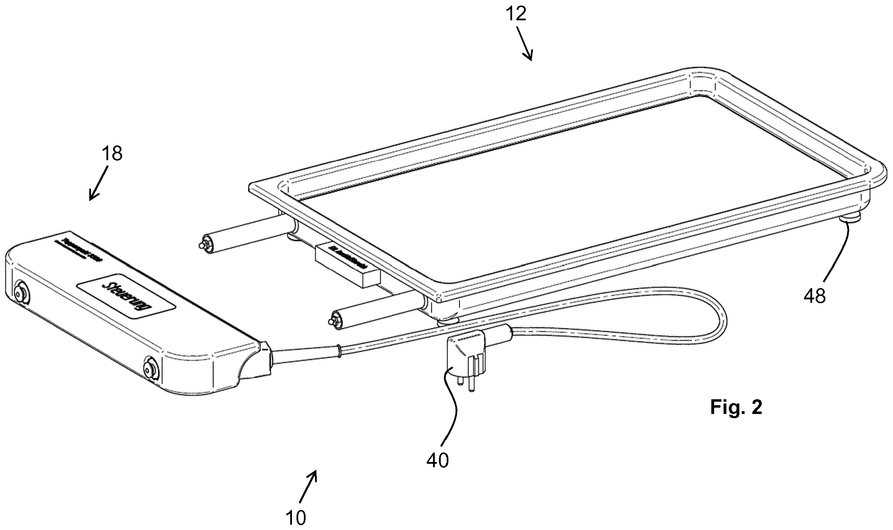

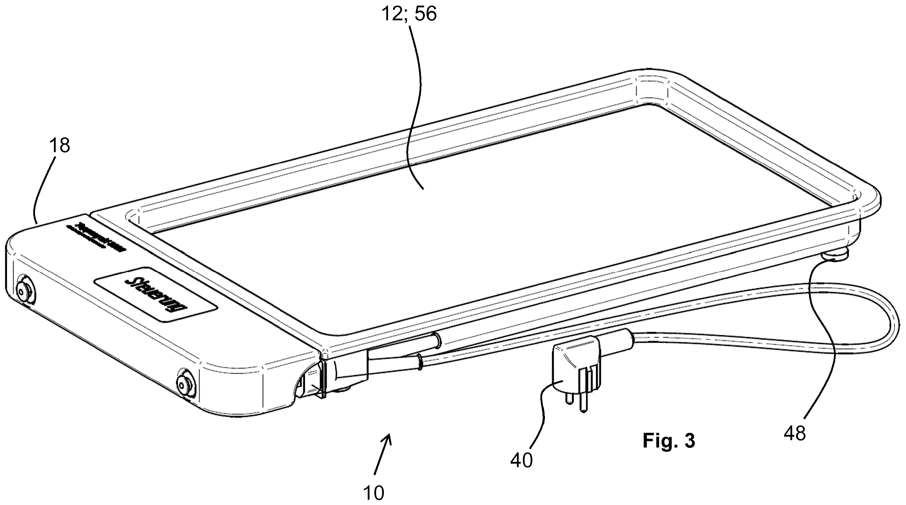

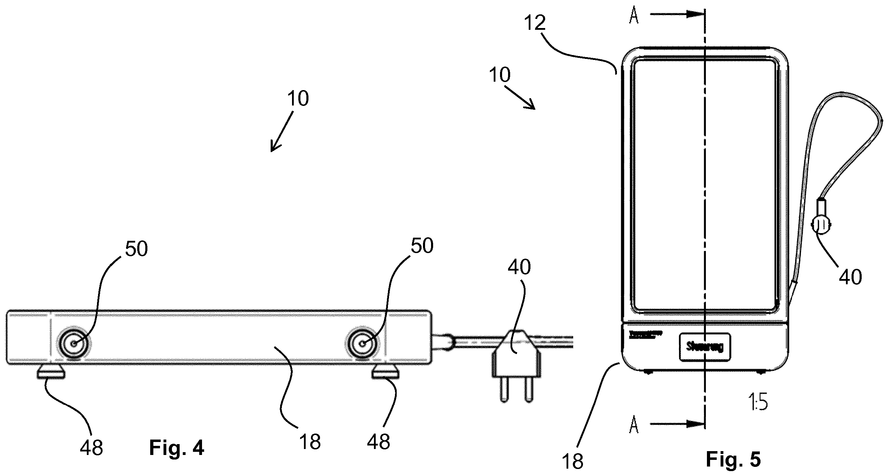

Die in den Figuren 1 bis 7 dargestellte, eine Ausführungsform des erfindungsgemäßen Systems 10 verkörpernde Teppanyaki-Grillplatte weist eine Speisenaufnahmevorrichtung 12 und eine daran ankoppelbare Dockingstation 18 auf. Die Speisenaufnahmevorrichtung 12 weist einen wannenartigen Grundkörper 42 und eine elektrische Heizeinrichtung 14 auf, wobei eine Isolierplatte 44 zwischen dem Grundkörper 42 und der elektrischen Heizeinrichtung 14 vorgesehen ist. Der elektrischen Heizeinrichtung ist ein Temperatursensor 16 zugeordnet, der auch in Anlage mit einer die Oberseite der Teppanyaki-Grillplatte bildenden Grillwanne 46 gelangt. Der Temperatursensor 16 steht mit einem Stecker 30 in Verbindung, um elektrische Signale mit der Dockingstation 18 austauschen zu können. An der Unterseite des Grundkörpers 42 sind vier Standfüße 48 vorgesehen, auf denen die Teppanyaki-Grillplatte vorzugsweise verhältnismäßig rutschsicher zum Stehen kommt. Die Speisenaufnahmevorrichtung 12 weist eine erste Kupplungseinrichtung auf, die einen ersten Zapfen 26, einen zweiten Zapfen 28 und einen Stecker 30 umfasst. Der erste Zapfen 26 und der zweite Zapfen 28 umfassen jeweils eine metallische äußere Hülse, die dazu vorgesehen ist, mit einem Schutzleiter einer Energiequelle 20 in Verbindung gebracht zu werden, die in Form einer mit dem öffentlichen Stromnetz in Verbindung stehenden Schuko-Steckdose angedeutet ist. Isoliert von der äußeren metallischen Hülse weisen der erste Zapfen 26 und der zweite Zapfen 28 im Inneren jeweils einen Leiter auf, wobei diese Leiter dazu vorgesehen sind, mit einem Außenleiter und einem Neutralleiter der Energiequelle 20 in Verbindung gebracht zu werden. Der zwischen dem ersten Zapfen 26 und dem zweiten Zapfen 28 angeordnete Stecker 30 ist ebenfalls Bestandteil der ersten Kupplungseinrichtung und dient wie erwähnt dazu, zumindest die Temperatursensorsignale zu der Dockingstation 18 zu übertragen.

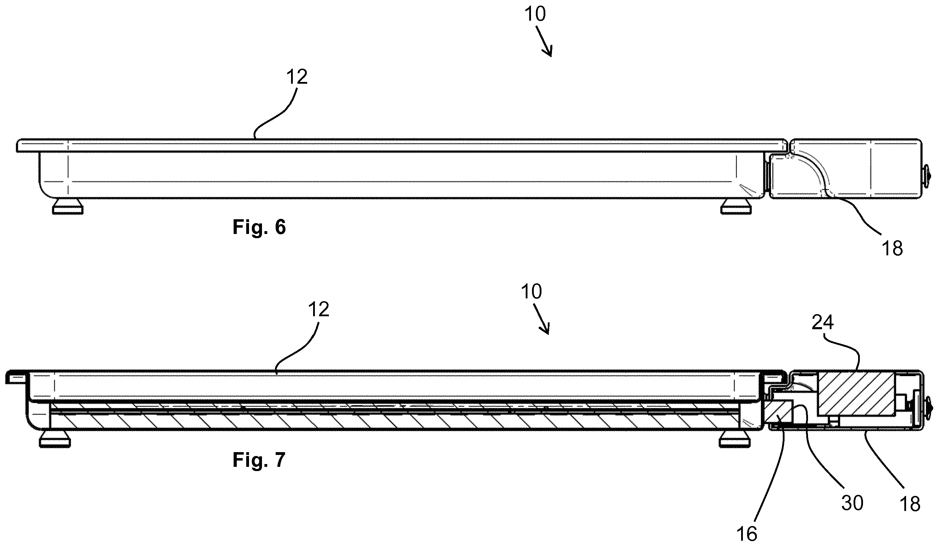

Die Dockingstation 18 kann einen beispielsweise aus Kunststoff hergestellten Grundkörper umfassen, in dem weitere Bestandteile der Dockingstation 18 untergebracht sind und/oder der weitere Bestandteile der Dockingstation 18 haltert. Die Dockingstation 18 weist eine zweite Kupplungseinrichtung auf, die eine erste Hülse 32, eine zweite Hülse 34 und eine Buchse 36 umfasst. Die erste Hülse 32 und die zweite Hülse 34 sind im angekoppelten Zustand der Dockingstation 18 dazu vorgesehen, den ersten Zapfen 26 beziehungsweise den zweiten Zapfen 28 aufzunehmen und eine Verbindung zu den Kontaktstiften des Netzsteckers 40 herzustellen. Die Buchse 36 ist in ihrem unteren Bereich mit nicht näher dargestellten (aber in Figur 7 zu erahnenden) Kontakten ausgestattet, die mit entsprechenden Kontakten des Steckers 30 zusammenwirken, um die Temperatursensorsignale zu der Dockingstation 18 zu übertragen, wenn diese an die Speisenaufnahmevorrichtung 12 angekoppelt ist. Die Dockingstation 18 umfasst weiterhin zwei Bedientasten 50 die mit geeigneten Wandlern 52 zusammenwirken, um geeignete elektrische Steuersignale zu erzeugen. Diese Steuersignale werden, ebenso wie die über die Buchse 36 empfangenen Temperatursensorsignale, einer intelligenten Einheit 54 zugeführt, die unter anderem den Betrieb des erfindungsgemäßen Systems 10 regelt beziehungsweise steuert. Die intelligente Einheit 54 umfasst eine nicht im Detail dargestellte optische Anzeigevorrichtung 24, die beispielsweise durch einen Touchscreen gebildet sein kann. Weiterhin umfasst die intelligente Einheit 54 eine Datenschnittstelle 22, die bei diesem Ausführungsbeispiel als drahtlose Datenschnittstelle 22 ausgebildet ist. Beispielsweise unter Verwendung des Bluetooth- oder eines WLAN-Protokolls kann die Teppanyaki-Grillplatte beispielsweise mit einem Smartphone oder einer ähnlichen Vorrichtung gekoppelt werden. Weiterhin umfasst die intelligente Einheit 54 Mittel 38 zur Ausgabe akustischer Signale. Zumindest bei einigen Ausführungsformen können diese akustischen Signale auch eine Sprachausgabe umfassen.

Die vorstehend erläuterte Teppanyaki-Grillplatte ist dazu ausgelegt, sämtliche in der Beschreibungseinleitung genannten Funktionen und Möglichkeiten zu erfüllen. Dabei ist die hierfür erforderliche Intelligenz ausschließlich in der Dockingstation 18 untergebracht, so dass die Speisenaufnahmevorrichtung 12 problemlos maschinell gereinigt werden kann.

Zwar wurde die Erfindung vorstehend anhand einer Teppanyaki-Grillplatte als Ausführungsbeispiel erläutert, es ist jedoch klar, dass beliebige Speisenaufnahmevorrichtungen in Betracht kommen, insbesondere beliebige Grillplatten 56, Pfannen 58, Töpfe 60, Fritteusen 62, Bräter 62 oder Kontaktgrills 64 mit einer oberen und einer unteren Grillplatte zwischen denen beispielsweise Burger-Patties gegrillt werden können, insbesondere auch in der Systemgastronomie.

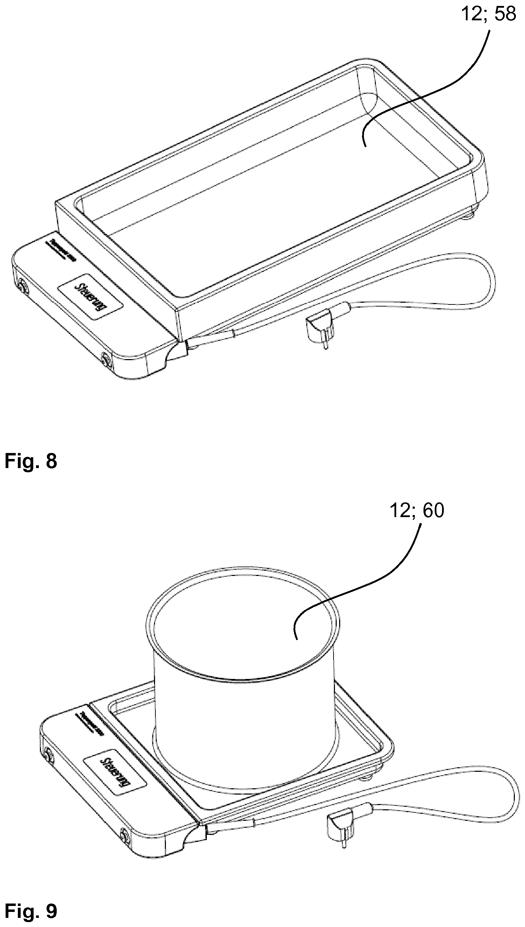

Beispielsweise zeigt Figur 8 eine perspektivische Darstellung einer Ausführungsform, bei der die Speisenaufnahmevorrichtung als Pfanne 58 ausgebildet ist.

Figur 9 zeigt eine perspektivische Darstellung einer Ausführungsform, bei der die Speisenaufnahmevorrichtung als Kochtopf 60 ausgebildet ist.

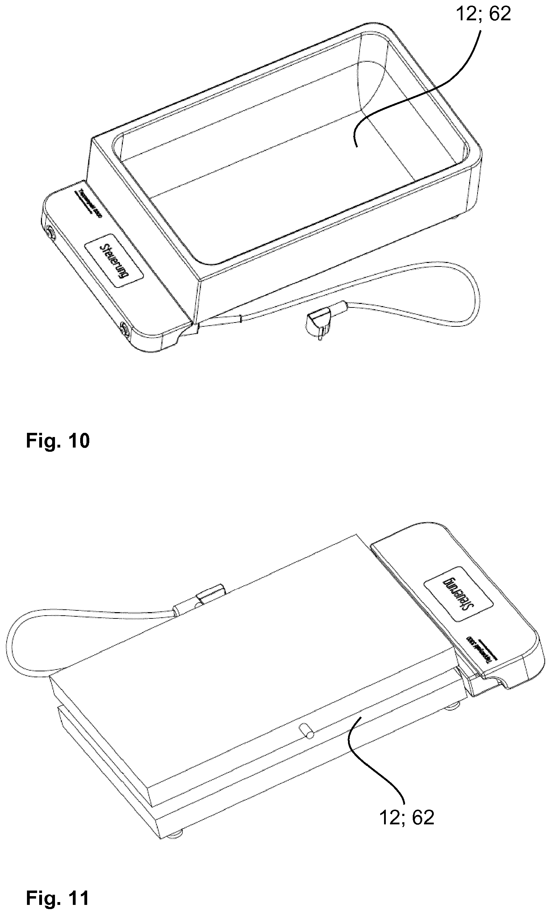

Figur 10 zeigt eine perspektivische Darstellung einer Ausführungsform, bei der die Speisenaufnahmevorrichtung als Bräter 62 beziehungsweise Fritteuse 62 (Frittier-Korb nicht dargestellt) ausgebildet ist.

Schließlich zeigt Figur 11 eine perspektivische Darstellung einer Ausführungsform, bei der die Speisenaufnahmevorrichtung als Kontaktgrill 64 ausgebildet ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: System
- 12: Speisenaufnahmevorrichtung
- 14: Elektrische Heizeinrichtung
- 16: Temperatursensor
- 18: Dockingstation
- 20: Energiequelle
- 22: Datenschnittstelle
- 24: Anzeigevorrichtung
- 26: Erster Zapfen
- 28: Zweiter Zapfen
- 30: Stecker
- 32: Erste Hülse
- 34: Zweite Hülse
- 36: Buchse
- 38: Mittel zur Ausgabe akustischer Signale
- 40: Netzstecker
- 42: Grundkörper
- 44: Isolierplatte
- 46: Grillwanne
- 48: Standfüße
- 50: Bedientasten
- 52: Wandler
- 54: Intelligente Einheit
- 56: Grillplatte
- 58: Pfanne
- 60: Topf
- 62: Bräter beziehungsweise Fritteuse
- 64: Kontaktgrill

## Patentansprüche

1. System (10) zur Zubereitung von Speisen, bei dem der Garvorgang mithilfe eines Temperatursensors (16) überwacht werden kann, mit einer Speisenaufnahmevorrichtung (12), in die eine elektrische Heizeinrichtung (14) spülmaschinenfest integriert ist, und mit einer Dockingstation (18), die einerseits mit einer Energiequelle (20) verbindbar ist und an die andererseits die Speisenaufnahmevorrichtung (12) manuell lösbar ankoppelbar ist, wobei zumindest ein Temperatursensor (16) spülmaschinenfest in die Speisenaufnahmevorrichtung (12) integriert ist, und wobei die Dockingstation (18) die Speisenaufnahmevorrichtung (12) basierend auf von dem spülmaschinenfest in die Speisenaufnahmevorrichtung (12) integrierten Temperatursensor (16) empfangenen Daten mit Energie versorgt, **dadurch gekennzeichnet, dass** das System (10) mehrere verschiedene Speiseaufnahmevorrichtungen (56, 58, 60, 62, 64) umfasst, mit denen die Dockingstation (18) verwendet werden kann, wobei der Dockingstation (18) mitgeteilt wird, mit was für einer Art von Speisenaufnahmevorrichtung (56, 58, 60, 62, 64) sie gerade verwendet wird, damit die Dockingstation (18) in einem Betriebsmodus betrieben werden kann, der speziell auf die aktuell verwendete Speisenaufnahmevorrichtung abgestimmt ist.

2. System (10) nach Anspruch 1, **dadurch gekennzeichnet, dass** es sich bei der Speisenaufnahmevorrichtung (12) um eine Grillplatte (56), eine Pfanne (58), einen Topf (60), eine Fritteuse (62), einen Bräter (62) oder einen Kontaktgrill (64) handelt.

3. System (10) nach Anspruch 1 oder 2, **dadurch gekennzeichnet, dass** die Dockingstation (18) eine Datenschnittstelle (22) umfasst, über die ihr Rezeptdaten zugeführt werden können.

4. System (10) nach Anspruch 3, **dadurch gekennzeichnet, dass** es sich bei der Datenschnittstelle (22) um eine drahtlose Datenschnittstelle handelt.

5. System (10) nach einem der vorhergehenden Ansprüche, **dadurch gekennzeichnet, dass** die Dockingstation (18) eine optische Anzeigevorrichtung (24) aufweist, mit der zumindest mit der Speisenzubereitung in Verbindung stehende Daten angezeigt werden können.

6. System (10) nach Anspruch 5, **dadurch gekennzeichnet, dass** mit der optischen Anzeigevorrichtung (24) Anweisungen zur Zubereitung von Speisen angezeigt werden können.

7. System (10) nach einem der vorhergehenden Ansprüche, **dadurch gekennzeichnet, dass** die Speisenaufnahmevorrichtung (12) eine erste Kupplungseinrichtung (26, 28, 30) und die Dockingstation (18) eine daran angepasste zweite Kupplungseinrichtung (32, 34, 36) aufweisen, wobei zumindest Versorgungsanschlüsse der Heizeinrichtung (14) und Temperatursensoranschlüsse im Bereich der ersten Kupplungseinrichtung zugänglich sind, um mit im Bereich der zweiten Kupplungseinrichtung (32, 34, 36) zugänglichen Anschlüssen der Dockingstation verbunden zu werden.

8. System (10) nach einem der vorhergehenden Ansprüche, **dadurch gekennzeichnet, dass** die Dockingstation (18) Mittel (38) zur Ausgabe akustischer Signale aufweist.

9. System (10) nach Anspruch 8, **dadurch gekennzeichnet, dass** über die Mittel (18) zur Ausgabe akustischer Signale akustische Anweisungen zur Zubereitung von Speisen ausgegeben werden können.

10. System (10) nach einem der vorhergehenden Ansprüche, **dadurch gekennzeichnet, dass** die Dockingstation (18) im angekoppelten Zustand ausschließlich über die erste Kupplungseinrichtung (26, 28, 30) und die zweite Kupplungseinrichtung (32, 34, 36) gehaltert ist.

11. System nach einem der vorhergehenden Ansprüche, **dadurch gekennzeichnet, dass** es zumindest eine weitere Speisenaufnahmevorrichtung aufweist, wobei die Dockingstation (18) wahlweise mit jeder Speisenaufnahmevorrichtung verwendet werden kann.

## Claims

1. A system (10) for preparing food in which the cooking process can be monitored with the aid of a temperature sensor (16), the system comprising a food receiving device (12) into which an electric heating element (14) is integrated in a dishwasher-safe manner, and a docking station (18) which is, on the one hand, connectable to a power source (20), and to which, on the other hand, the food receiving device (12) can be coupled so as to be manually detachable, wherein at least one temperature sensor (16) is integrated in the food receiving device (12) in a dishwasher-safe manner, and wherein the docking station (18) supplies the food receiving device (12) with power based on data received from the temperature sensor (16) integrated in the food receiving device (12) in a dishwasher-safe manner, **characterised in that** the system (10) comprises a plurality of different food receiving devices (56, 58, 60, 62, 64) for which the docking station (18) can be used, wherein the docking station (18) is informed for what type of food receiving device (56, 58, 60, 62, 64) it is currently used so that the docking station (18) can be operated in an operating mode which is specifically adapted to the currently used food receiving device.

2. The system (10) according to claim 1, **characterised in that** the food receiving device (12) is a griddle (56), a frying pan (58), a pot (60), a fryer (62), a roasting tray (62) or a clam shell grill (64).

3. The system (10) according to claim 1 or 2, **characterised in that** the docking station (18) comprises a data interface (22) via which it can be supplied with recipe data.

4. The system (10) according to claim 3, **characterised in that** the data interface (22) is a wireless data interface.

5. The system (10) according to one of the preceding claims, **characterised in that** the docking station (18) comprises an optical display device (24) on which at least data associated with the food preparation can be displayed.

6. The system (10) according to claim 5, **characterised in that** instructions for preparing food can be displayed on the optical display device (24).

7. The system (10) according to one of the preceding claims, **characterised in that** the food receiving device (12) comprises first coupling means (26, 28, 30) and the docking station (18) comprises matching second coupling means (32, 34, 36), wherein at least supply connections of the heating element (14) and temperature sensor connections are accessible in the area of the first coupling means so as to be connected to connections of the docking station accessible in the area of the second coupling means (32, 34, 36).

8. The system (10) according to one of the preceding claims, **characterised in that** the docking station (18) comprises means (38) for outputting acoustic signals.

9. The system (10) according to claim 8, **characterised in that** acoustic instructions for preparing food can be output via the means (18) for outputting acoustic signals.

10. The system (10) according to one of the preceding claims, **characterised in that** the docking station (18) is exclusively supported via the first coupling means (26, 28, 30) and the second coupling means (32, 34, 36) in the connected state.

11. The system according to one of the preceding claims, **characterised in that** it comprises at least one further food receiving device, wherein the docking station (18) can be optionally used with each food receiving device.

## Revendications

1. Système (10) de préparation d'aliments, dans lequel la cuisson peut être surveillée à l'aide d'un capteur de température (16), avec un dispositif de réception des aliments (12), dans lequel est intégré un dispositif de chauffage électrique (14) résistant au lave-vaisselle, et avec une station d'accueil (18), qui d'une part peut être branchée à une source d'énergie (20) et qui d'autre part peut être couplée au dispositif de réception des aliments (12) de façon démontable manuellement, au moins un capteur de température (16) résistant au lave-vaisselle étant intégré dans le dispositif de réception des aliments (12), et la station d'accueil (18) alimentant en énergie le dispositif de réception des aliments (12) sur la base de données reçues par le capteur de température (16) résistant au lave-vaisselle intégré dans le dispositif de réception des aliments (12), **caractérisé en ce que** le système (10) comprend plusieurs dispositifs de réception des aliments différents (56, 58, 60, 62, 64), avec lesquels la station d'accueil (18) peut être utilisée, la station d'accueil (18) étant informée avec quel type de dispositif de réception des aliments (56, 58, 60, 62, 64) elle est actuellement utilisée afin que la station d'accueil (18) puisse être opérationnelle dans un mode de fonctionnement qui est adapté spécialement au dispositif de réception des aliments actuellement utilisé.

2. Système (10) selon la revendication 1, **caractérisé en ce que** le dispositif de réception des aliments (12) est une plaque de grill (56), une poêle (58), une casserole (60), une friteuse (62), une cocotte (62) ou un gril de contact (64).

3. Système (10) selon la revendication 1 ou 2, **caractérisé en ce que** la station d'accueil (18) comprend une interface de données (22), par laquelle des données de recette peuvent être transmises.

4. Système (10) selon la revendication 3, **caractérisé en ce que** l'interface de données (22) est une interface de données sans fil.

5. Système (10) selon l'une des revendications précédentes, **caractérisé en ce que** la station d'accueil (18) présente un dispositif d'affichage optique (24), avec lequel au moins des données associées à la préparation d'aliments peuvent être affichées.

6. Système (10) selon la revendication 5, **caractérisé en ce que** des instructions sur la préparation d'aliments peuvent être affichées avec le dispositif d'affichage optique (24).

7. Système (10) selon l'une des revendications précédentes, **caractérisé en ce que** le dispositif de réception des aliments (12) et la station d'accueil (18) présentent respectivement un premier dispositif de couplage (26, 28, 30) et un deuxième dispositif de couplage (32, 34, 36) adapté au premier, au moins des raccords d'alimentation du dispositif de chauffage (14) et des raccords de capteurs de température étant accessibles dans la zone du premier dispositif de couplage afin d'être branchés aux raccords de la station d'accueil accessibles dans la zone du deuxième dispositif de couplage (32, 34, 36).

8. Système (10) selon l'une des revendications précédentes, **caractérisé en ce que** la station d'accueil (18) présente des moyens (38) d'émettre des signaux sonores.

9. Système (10) selon la revendication 8, **caractérisé en ce que** les moyens (18) d'émettre des signaux sonores peuvent émettre des instructions sonores pour la préparation d'aliments.

10. Système (10) selon l'une des revendications précédentes, **caractérisé en ce que** la station d'accueil (18) est maintenue à l'état couplé uniquement par le premier dispositif de couplage (26, 28, 30) et le deuxième dispositif de couplage (32, 34, 36).

11. Système selon l'une des revendications précédentes, **caractérisé en ce qu'il** présente au moins un autre dispositif de réception des aliments, la station d'accueil (18) pouvant être utilisée au choix avec chaque dispositif de réception des aliments.
